# EUROPEAN PATENT SPECIFICATION

(11) **EP 3 421 192 B1**
(45) Date of publication and mention of the grant of the patent: **31.05.2023**
(21) Application number: 17178945.6
(22) Date of filing: 30.06.2017
(51) Int. Cl.: B25J 15/00, B25J 15/02

(54) **GRIPPING DEVICE, ROBOT HAVING SUCH A GRIPPING DEVICE, AND WIRE ELECTRIC DISCHARGE MACHINING MACHINE CELL, HAVING SUCH A ROBOT**
GREIFVORRICHTUNG, ROBOTER MIT SOLCH EINER GREIFVORRICHTUNG UND DRAHTERODIERMASCHINEN-MACHINENZELLE MIT SOLCH EINEM ROBOTER
DISPOSITIF DE PRÉHENSION, ROBOT ÉQUIPÉ D'UN TEL DISPOSITIF DE PRÉHENSION ET CELLULE DE MACHINE D'USINAGE PAR DÉCHARGE ÉLECTRIQUE À FIL PRÉSENTANT UN TEL ROBOT

(43) Date of publication of application: 02.01.2019
(73) Proprietor: System 3R International AB, 162 50 Vällingby (SE)
(72) Inventor: Blixt, Marten, 178 34 Ekerö (SE)
(74) Representative: Fenner, Seraina

(56) References cited:
- EP-A1- 1 714 750
- US-A- 4 576 407
- US-A1- 2010 123 325

## Description

The invention is related to a gripping device, in particular configured as a robot tool or a robot hand, a robot having such a gripping device, and a wire electric discharge machining machine cell, having a robot with a respective gripping device.

In a machine cell comprising a robot and one or several wire electric discharge machining (WEDM) machines cut-out waste, also called slug, shall be automatically removed prior to a moving of finished parts. In such a type of manufacturing, in particular when sheets or plates are machined, the finished parts are often discs. To save time, a number of plates or sheets are stacked together and wire-cute at the same time. The cut-out centers often have a form like a tooth wheel or another non-circular shape. After being cut-out, a stack of waste or slug, arranged in a center of finished parts or at least encompassed by the finished parts, falls down a few millimeters on a bottom plate when the cut is completed. In order to remove the stack of typically plate-shaped slug, a stack of plates will have to be grasped and lifted upwards without making mechanical contact to the finished parts in order to avoid jamming, on the one hand, and impairing, in particular scratching, the finished parts, on the other hand. This requires an accurate gripping and centering of all slug plates. If only one of the slug plates is off-center, it will hit an inner surface of the finished parts, and the whole waste stack will get stuck. A further problem with known grippers is that one or several slug plates could get loose from the gripper and fall down.

US 4576407 is related to a robot hand for lifting an aperture panel includes a pair of tong fingers pivotally mounted upon a housing having a locating face. The tong fingers have opposed facing knuckles including a circular cylindrical wall portion adjacent the pivot and spherical cam faces adjacent the distal end. An air cylinder operated toggle linkage moves the tong arms between a pinched together position contracting the tong finger knuckles for insertion through the aperture of the aperture panel and spread apart positions, in which the circular cylindrical wall portions engage the aperture walls to locate the panel in the longitudinal and transverse directions and the spherical cam faces engage with the underside of the panel and lift the panel against the locating face of the housing.

US2010123325 is related to a pneumatically controlled grasping device to grasp and handle items or bodies provided with a graspable member. It comprises a supporting sleeve that internally delimits an intermediate space contiguous to a distal opening and a guide chamber connected to a source of fluid under pressure. In the intermediate space a gripper means is mounted, facing the distal opening and designed to engage with the graspable member.

It is an object of the invention to provide a gripping device, a robot having such a gripping device, and a wire electric discharge machining machine cell, having a robot with such a gripping device, wherein the above-mentioned problems do not occur.

This object is achieved by providing a gripping device according to appended claim 1. Further advantageous embodiments are defined in the sub-claims.

In particular, a gripping device is provided which is configured as a robot tool or a robot hand, the gripping device having at least two gripper fingers, preferably exactly two gripper fingers, which are rotationally coupled to each other by a joint, the gripper fingers being pivotable about a rotational axis defined by the joint - and in particular located at the center of the joint - from at least one of a gripping position and a release position into the other one of the release position and the gripping position, wherein an angle between the gripper fingers about the rotational axis is larger in the gripping position than in the release position, wherein the gripper fingers are configured to reach from a first side of the object through a through-hole arranged in an object to be gripped by the gripping device, wherein the gripper fingers have an end piece at a distal end thereof, the end piece being configured to engage behind the object at a second side of the object, the second side being arranged opposite the first side along a length axis of the gripper fingers, which in particular is - at the same time - a length axis of the through-hole in the object, and wherein the joint is fixed to a joint support, the joint support extending from a main body which comprises an actuator mechanism for actuating the gripper fingers between at least the gripping position and the release position, such that the joint is arranged in a distance from the main body. The gripping device thus has at least two long gripper fingers which may be completely fitted into the through-hole of an object to be gripped, wherein the object may be gripped by pivoting the gripper fingers about the rotational axis from the release position into the gripping position, which means to enlarge the angle between the gripper fingers and thus move the gripper fingers away from each other, thereby gripping the object from inside the through-hole, and urging the gripper fingers from inside against an inner circumferential wall of the through-hole. Thereby, the contact of the gripper fingers with the through-hole may align separate plates of an object being a stack of, e.g., slug plates. Further, since the gripper fingers have an end piece which engages behind the object at its second side, the whole object is completely and safely held by the gripper fingers in their gripping position. In particular, a lower-most plate of a stack of slug plates will stably rest on the end piece when the gripper fingers are in the gripping position gripping the object, such that no plate will get loose from the gripping device and fall down. As the joint is fixed to the joint support and further via the joint support to the preferably rigid main body, the joint is stably and firmly held in a well-defined position relative to the main body and thus may precisely be positioned by a robot having the gripping device as a robot tool or hand relative to an object to be gripped. Because the joint is arranged in a distance from the main body, the actuator mechanism is configured to introduce a force - in particular into elongated gripper elements comprising the gripper fingers - in a distance from the joint, thus applying a relatively high torque by a relatively low force.

The actuator mechanism itself can be stably and securely held at, or in, the main body. In particular, the main body may comprise a housing which accommodates, at least partly, the actuator mechanism.

The main body preferably is configured to be coupled or attached to a robot arm or a robot wrist of a robot. In particular, the main body preferably is attached to or comprises an interface for coupling to a robot arm or robot wrist.

The joint support may preferably be configured in one piece with the main body. However, the joint support may also preferably be configured as a separate part fixedly mounted or attached to the main body.

A robot tool or a robot hand in particular is a device which can be connected to a robot arm, preferably attached to a robot wrist, and which further can be actuated by the robot to manipulate or act upon objects.

The gripper fingers are preferably configured in such a way that they move away from each other and thus confine a larger angle between each other when they pivot from their release position into their gripping position, wherein the gripper fingers move towards each other, thus reducing the confined angle, when pivoting from their gripping position into their release position. Most preferably, the angle between the gripper fingers is 0° in the release position, such that the gripper fingers are in close contact with each other.

The object to be gripped by the gripper fingers is preferably a stack of a plurality of elements, in particular a stack of plates, preferably a stack of slug plates, in particular resulting from wire electric discharge machining. The through-hole is preferably located in a center of the object, i.e. a center axis of the through-hole is at the same time a center or symmetry axis of the object.

A distal end of the gripper fingers is in particular an end thereof which faces the object to be gripped during the gripping action, and in particular faces away from a robot wrist or a robot arm. The term "distal" will be used this way throughout the application. In contrast, the term "proximal" will denote a direction facing away from the object to be gripped during gripping action, and in particular faces towards a robot wrist or a robot arm.

The end piece preferably is comprised by several parts, each part arranged at one of the at least two gripper fingers. In particular, the gripping device may comprise two half-end pieces, a first half-end piece arranged at a first gripper finger of the two gripper fingers, and a second half-end piece arranged at a second gripper finger of the two gripper fingers, the gripping device having exactly two gripper fingers.

The joint, in particular, is configured as a hinge allowing for a pivoting movement of the gripper fingers relative to each other about the rotational axis defined by the joint.

According to an embodiment of the invention, the gripper fingers have an outer surface, wherein the gripper fingers are configured to engage an inner circumferential surface of the through-hole of the object with the outer surface in the gripping position. The outer surface of the gripper fingers is in particular an outer circumferential surface of the gripping device when the gripper fingers are in their release position. Each gripper finger of the gripping device has a partial outer surface, wherein the partial outer surfaces of the gripper fingers together form the outer surface, which preferably is continuous in the release position, when the gripper fingers contact each other. In the gripping position, when the gripper fingers are pivoted away from each other, the outer surface is partially interrupted, because the gripper fingers, and thus also the partial outer surfaces are spaced apart from each other. In particular, the gripper fingers are configured to make complete surface contact between the outer surface on the one hand and the inner circumferential surface of the through-hole of the object on the other hand in the gripping position. Thus, the object is held in a most stable and secure manner, wherein gripping forces are introduced in the object over the whole and complete outer surface.

Preferably, the gripper fingers are configured to be introduced into, and removed from, the through-hole of the object without making contact with the inner circumferential surface in the release position. Thus, in order to grip the object or to release the same, the gripper fingers can be placed inside the through-hole and removed from the same without jamming with the object, thereby also avoiding jamming of at least parts of the object with finished parts surrounding the same.

According to an embodiment of the invention, the outer surface of the gripper fingers is conical in the release position, wherein a cone angle of the outer surface is selected such that the outer surface makes full surface contact with the inner circumferential surface of the object in the gripping position. In particular, the cone angle of the outer surface is selected such that the outer surface has the same shape and dimension as the preferably cylindrical inner circumferential surface of the object, such that the inner circumferential surface is contacted by the complete outer surface of the gripper fingers. Thus, a gripping force can be introduced homogenously about the outer surface, and the object can be gripped in a most stable and secure way. In a preferred embodiment, the full cone angle of the outer surface in its release position is selected to equal the opening angle confined by the gripper fingers in their gripping position. Particularly such a choice of the cone angle can guarantee that the outer surface will make full surface contact with the inner circumferential surface with the object in the gripping position.

Further, since the outer surface makes full surface contact with the inner circumferential surface of the object, the different plates of the object being a stack of slug plates will be accurately centered along a common length axis in a well-defined way.

The outer surface being conical in particular means that the outer surface forms a truncated cone, a virtual tip of the truncated cone facing in distal direction, when the gripper fingers are in their release position.

According to the invention, the gripper fingers are elastically deformable at least in a region of the distal end thereof. In particular, the gripper fingers may be elastically deformable in a region adjacent to the distal end, and/or in a region comprising the distal end. When the gripper fingers are pivoted from their release position in their gripping position, they will thus be slightly elastically deformed in the region of the distal end, and thus an elastic force resulting from the elastic deformation will add to a gripping force applied to the gripper fingers and urging the same in their gripping position. Thus, the total gripping force and also the gripping pressure introduced into the object will be higher for a region of the same near its second side than for another region near the first side. In particular, the total gripping force and gripping pressure will be higher for lower plates located near the distal end of the gripper fingers than for higher-lying plates located in a distance to the distal end of the gripper fingers for an object being a stack of slug plates. Thus, it is ensured that no plate of the second plates will be dropped and in particular the lowest plates are stably held, and the higher plates - in addition to the gripping force acting in radial direction, may rest on the lower plates in axial direction.

According to an embodiment of the invention, the end piece has a proximal surface which is conical. The proximal surface of the end piece faces the second - lower - side of the object in the gripping position. In particular, the proximal surface has the shape of a truncated cone, a virtual tip of the truncated cone facing in proximal direction, i.e. towards the joint. The end piece having a conical proximal surface facilitates the movement of the gripper fingers from their gripping position into their release position, and in particular avoids that the gripper fingers get stuck in the region of the distal end when moved from their gripping position into their release position.

Preferably, the cone angle of the proximal surface is selected from at least 50° to at most 56°, preferably from at least 51° to at most 55°, preferably from at least 52° to at most 54°, preferably it is 53°.

As the outer surface of the gripper fingers, also the proximal surface of the end piece is conical, in particular in the release position, when the gripper fingers are in contact to each other at their distal end, but partially interrupted in the gripping position, when the gripper fingers are spaced apart from each other in the region of their distal end. Insofar, each gripper finger has a partial proximal surface at the end piece, the partial proximal surface of the gripper fingers together forming the proximal surface in the release position.

According to an embodiment of the invention, an arm is coupled to each gripper finger of the at least two gripper fingers, each of the arms extending from the joint towards a proximal end of the arm, i.e. the arms facing away from the gripper fingers at the joint, the arms being coupled at a coupling area to the actuator mechanism which is configured to pivot the gripper fingers from the release position into the gripping position - and preferably back from the gripping position into the release position. The coupling area is located in a distance to the joint, as seen along a length direction of the arms, i.e. along the axial direction. Thus, a certain force applied by the actuator mechanism can most effectively be converted into a high gripping torque introduced into the arms. This high torque is also applied to the gripper fingers via the joint and finally converted into a gripping force in the region of the inner circumferential surface of the object in order to safely and securely grip the same.

The coupling area is preferably located at the proximal end of the arms, in particular well-above the joint.

Each arm is preferably configured in one piece with its respective gripper finger. In particular, the gripping device comprises as much gripper elements as it comprises gripper fingers, wherein each gripper element - preferably being configured in one piece - comprises a gripper finger below the joint and an arm above the joint.

According to an embodiment of the invention, a distance - measured along a length extension of the arms - from the joint to the coupling area of the arms equals a distance - measured along a length extension of the gripper fingers - from the joint to the distal end of the gripper fingers. In particular in this way it is possible to introduce a high and stable gripping torque into the gripper fingers via the arms and the joint with a comparatively moderate actuating force applied by the actuator mechanism to the coupling area of the arms.

According to an embodiment of the invention, each arm of the arms which corresponds to a certain gripper finger, is located at the same side of a virtual plane as the certain gripper finger corresponding to the arm, the virtual plane comprising the rotational axis and dividing the at least two gripper fingers from each other, such that a first gripper finger of the gripper fingers is arranged at another side of the virtual plane than a second a gripper finger of the at least two gripper fingers. In particular, if the gripping device comprises exactly two gripper fingers, the virtual plane divides the space into two half-spaces, the virtual plane comprising the rotational axis, and each half-space at each side of the virtual plane comprising exactly one gripper finger and at the same time the very arm corresponding to and preferably configured in one piece with the gripper finger located at the same side of the virtual plane. Thus, each arm is located in the same half-space with its respective gripper finger. This is unlike the configuration of a typical scissor, where scissor elements comprising a scissor arm and a scissor blade cross each other, such that each scissor arm is located in another half-space than its' assigned scissor blade. According to the preferred embodiment of the invention described here, the gripper elements of the gripping device do not cross each other at the joint. Thus, when the arms are moved away from each other by the actuator mechanism, the gripper fingers will pivot towards each other; and the gripper fingers will pivot away from each other when the arms are pivoted towards each other about the rotational axis by the actuator mechanism. Thus, the actuator mechanism applies a pushing force, resulting in a pressure force to the arms, rather than a pulling or tension force, for introducing a gripping force into the gripper fingers. Thus, the gripping force can be applied in a most stable and effective manner by the actuator mechanism.

According to an embodiment of the invention, the actuator mechanism comprises at least one pneumatic actuator. The actuator mechanism may comprise exactly one pneumatic actuator coupled to all arms, or, preferably, one pneumatic actuator for each arm, i.e. as many pneumatic actuators as there are arms in the gripping device. Preferably, the at least one pneumatic actuator acts upon the arms from an outer side towards an inner side of the same, thus pushing the arms towards each other in order to pivot the gripper fingers from their release position into their gripping position.

The gripper fingers are preferably pre-tensioned into the gripping position by at least one pre-load element. Preferably, one pre-load element is assigned to each arm of the gripping device. However, it is also possible that all arms are pre-tensioned by one and the same pre-load element. Preferably, the pre-load element is configured as a spring which is configured to introduce as a spring force into the arms pre-tensioning the same and thus the gripper fingers into their gripping position.

Additionally or alternatively, the gripper fingers are urged into the gripping position by the at least one pneumatic actuator. Thus, the gripping force for gripping the object is at least partly applied by the at least one pneumatic actuator.

Additionally or alternatively, the gripper fingers are urged into the release position by the at least one pneumatic actuator. In this case, the movement of the gripper fingers from their gripping position into their release position is caused by the at least one pneumatic actuator.

Most preferably, the gripper fingers are urged into the gripping position by the pre-tensioning force of the pre-load element combined with the force applied by the at least one pneumatic actuator. Thus, a high-gripping force results from this combination of forces. Further, the gripper fingers are urged into their release position by the at least one pneumatic actuator against the pre-tensioning force of the pre-load element. In this configuration, gripping is most safely done and secured by the pre-tensioning force, wherein the gripped object may only be released by actively applying a force outbalancing the pre-tensioning force of the pre-load element by the at least one pneumatic actuator urging the gripper fingers into their release position.

The object of the invention is also achieved by providing a robot, having - in particular as a robot hand or a robot tool - a gripping device according to at least one of the above-explained embodiments. Thus, in particular, the same advantages will be provided by the robot which are conferred by the gripping device as explained above.

According to an embodiment of the invention, the robot is configured to remove an inner cut-out stack of plates as an object to be gripped from a wire electric discharge machining machine. In particular, in this case, the above-detailed advantages will be provided.

Finally, the object of the invention is also achieved by providing a wire-electric discharge machining machine cell, having at least one wire electric discharge machine and a robot according to at least one of the embodiments detailed above. The robot having the gripping device is configured to remove slug, in particular a stack of slug plates, automatically from finished parts machined in the wire electric discharge machining machine cell without any jamming or dropping of plates. By providing the wire electric discharge machining machine cell, in particular the same advantages are reached which are detailed above with respect to the gripping device and the robot.

The invention is further explained with reference to the drawings, wherein
- Figure 1: shows a three-dimensional view of an embodiment of a gripping device;
- Figure 2: shows a front view of the gripping device according to figure 1;
- Figure 3: shows the gripping device according to figures 1 and 2 while gripping an object, and the object being a stack of slug discs in a view from above;
- Figure 4: a detail of the gripping device according to figures 1 to 3, and
- Figure 5: a force or pressure distribution for the gripping device according to figures 1 to 4 when gripping the object in the gripping position.

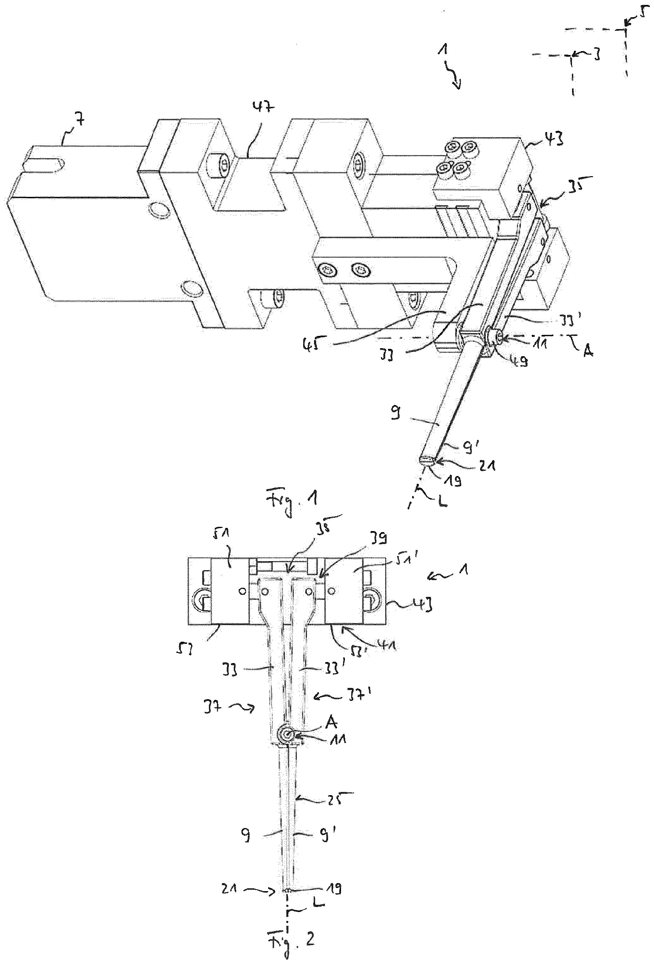

**FIG. 1** shows a 3-dimensional view of an embodiment of a gripping device 1, which is preferably part of a robot 3, the robot 3 preferably being part of a wire electric discharge machining machine cell 5. The robot 3 and the wire electric discharge machining machine cell 5 are only schematically shown in figure 1. The gripping device 1 is configured as a robot tool, in a particular as a robot hand, having an interface 7 which is configured for being coupled to a robot wrist or a robot arm of the robot 3.

The gripping device 1 has at least two, in this embodiment exactly two gripper fingers 9, 9', which are rotationally coupled to each other by a joint 11. The gripper fingers 9, 9' are pivotable about a rotational axis A defined by the joint 11, wherein the rotational axis A is located at the center of the joint 11. The gripper fingers 9, 9' can pivot about the rotational axis A at least between a gripping position and a release position, the gripper fingers 9, 9' being arranged in their release position in figure 1. An angle between the gripper fingers 9, 9' about the rotational axis A is larger in the gripping position than in the release position, in particular, the angle is 0° in the release position, as shown in figure 1, such that the gripper fingers 9, 9' are in contact with each other. They are moved away from each other when pivoted from the release position into the gripping position, and they are moved towards each other when pivoted back from the gripping position into the release position.

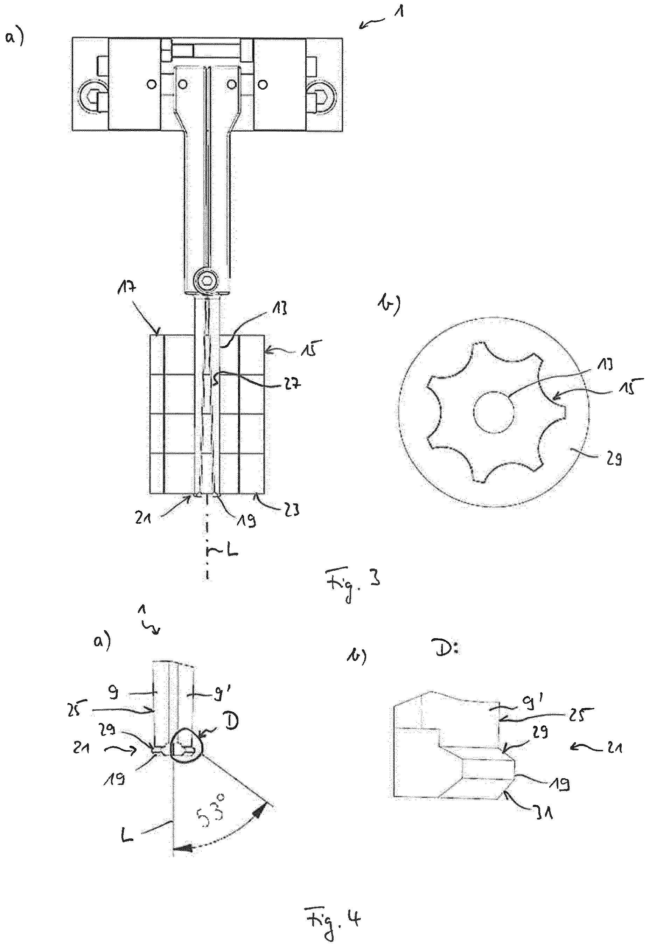

The gripper fingers 9, 9' are configured to reach through a through-hole 13 in an object 15 to be gripped by the gripping device 1 from a first side 17 of the object 15 - as shown, e.g., in figure 3, and the gripper fingers 9, 9' have an end piece 19 at a distal end 21 of the gripper fingers 9, 9'. The end piece 19 is configured to engage behind the object 15 at a second side 23 of the object 15 arranged opposite the first side 17 along a length axis L of the gripper fingers 9, 9', which is at the same time a length axis L of the object 15, when the gripper fingers 9, 9' are arranged relative to the object 15 for gripping the object 15. The gripper fingers 9, 9' can stably hold the object 15 by reaching through the through-hole 13 and engaging behind the object 15 with the end piece 19, such that the gripper fingers 9, 9' can apply a gripping force from inside the through-hole 13 on the one hand, and the object 15 can rest upon the end piece 19 on the other hand. In particular, an object 15 being a stack of elements, in particular a stack of slug plates cut out from finished parts by wire electric discharge machining, can be securely and stably gripped.

**FIG. 2** shows a front view of the embodiment of the gripping device 1 according to figure 1.

Parts or elements which are equal or functionally equivalent to each other are denoted with same reference numerals throughout all of the figures, such that reference is made to the preceding description, respectively. The gripper fingers 9, 9' have an outer surface 25, the outer surface 25 being in particular an outer circumferential surface 25. The gripper fingers 9, 9' are configured to engage an inner circumferential surface 27, as shown in figure 3, of the through-hole 13 with the outer surface 25 in the gripping position.

In particular, the outer surface 25 is conical in the release position as shown in figure 2, wherein a cone angle of the outer surface 25 is selected such that the outer surface 25 makes full surface contact with the inner circumferential surface 27 of the object 15 in the gripping position. Thus, stable gripping forces can be applied throughout the complete outer surface 25 to the inner circumferential surface 27.

In particular, the half-cone angle of the outer surface 25 can be chosen to equal or at least approximately equal half of an opening angle of the gripper fingers 9, 9' in their gripping position. Thus, the conical outer surface 25 - being conical in the release position - transforms into an interrupted cylindrical surface, when the gripper fingers 9,9' are pivoted into the gripping position. Half of the opening angle of the gripper fingers 9,9' in the gripping position preferably amounts to from at least 1° to at most 2°, preferably to 1.5°.

The gripper fingers 9, 9' are elastically deformable in a region of the distal end 21, such that an elastic force stemming from a deformation of the gripper fingers 9, 9' will add to a gripping force or gripping pressure introduced into the inner circumferential surface 27 in the gripping position in the region of the distal end 21. Thus, the total gripping pressure and gripping force will be highest in the region of the second side 23 of the object 15. This, in particular, means that lower plates of a stack of slug plates being the object 15 will be held most stably and not easily fall off from the gripper fingers 9, 9', and further that higher plates of the stack of slug plates will not only be held by the gripping force acted upon the inner circumferential surface 27 by the gripper fingers 9, 9', but also may rest upon the lower plates, thus being also fixed along the direction of the length axis L.

**FIG. 3** shows a front view of the embodiment of the gripping device 1 according to figures 1 and 2 at a), and further a detailed view of the object 15 from above at b). As already mentioned, preferably the object 15 is a stack of slug plates being cut out from finished parts 29 by wire electric discharge machining, wherein the slug plates have an outer shape like a tooth-wheel, or another non-circular shape. A gap between the slug plates and the finished parts 29 is typically only e.g. about 0.3 mm. Thus, it is of utmost importance to stably grip and center the slug plates about the length axis L, and remove the same in a most stable way from the finished parts 29, in order to avoid any jamming or getting stuck of the slug plates with the finished parts 29. In this respect, the gripping device 1 is able to stably and securely grip the object 15 and further center the slug plates of the object 15 about the length axis L, in particular by making full surface contact of the outer surface 25 with the inner circumferential surface 27.

**FIG. 4** shows a detailed view of the proximal end 21 of the gripper fingers 9, 9' of the embodiment of the gripping device 1 according to figures 1 to 3. At a), a larger part of the gripper fingers 9, 9' is shown, wherein at b) a detail D as marked at a) is shown. The end piece 19 has a proximal surface 29 which is conical and has - in the release position of the gripper fingers 9, 9' - a half-cone angle as measured about the length axis L from at least 50° to at most 56°, preferably from at least 51° to at most 55°, preferably from at least 52° to at most 54°, preferably - as shown in figure 4 - of 53°. In the gripping position, this angle is enlarged because of the pivoting movement of the gripper fingers 9, 9', then being preferably 2° larger than in the release position, most preferably amounting to 55°.

The conical proximal surface 29 in particular serves two purposes: first, it facilitates gripping of the object 15 when pivoting the arms 9, 9' from their release position into their gripping position; second, it avoids getting stuck of the gripper arms 9, 9' when they are moved back from their gripping position into the release position in order to leave the object 15.

Further, the end piece 19 preferably has a conical distal surface 31 being configured as a chamfer, which in particular facilitates introducing of the gripper fingers 9,9' into the through-hole 13 for gripping the object 15. The conical distal surface 31 may comprise a similar or equal cone angle as the proximal surface 29.

The end piece 19 preferably has an outer diameter which is larger than the outer diameter of the outer surface 25 in the region of the distal end 21. In particular, the diameter of the end piece 19 is preferably 1 mm larger than the diameter of the outer surface 25; i.e., an outer rim of the end piece 19 extends 0.5 mm in radial direction beyond the outer surface 25 in the region of the distal end 21.

Going back to figure 2, an arm 33, 33' is coupled to each gripper finger 9, 9', wherein each arm 33, 33' extends form the joint 11 towards a proximal end 35 of the arm 33, 33'. The arms 33, 33' preferably are configured in one piece with their respective gripper fingers 9,9'. In the particular embodiment as shown in the figures, the gripping device 1 has two gripper elements 37, 37', each gripper element 37, 37' having an arm 33, 33' and a gripper finger 9,9' configured in one piece, wherein the gripper elements 37, 37' are pivotably joined to each other at the joint 11.

The arms 33, 33' are coupled at a coupling area 39 being spaced apart from the joint 11 to an actuator mechanism 41 which is configured to pivot the gripper fingers 9, 9' from the release position into the gripping position, and vice versa. In particular, the coupling area 39 is located at the proximal end 35 of the arms 33, 33', and thus also the actuator mechanism 41 is located in the region of the proximal end 35 of the arms 33, 33'.

Preferably, a distance from the joint 11 to the coupling area 39 of the arms 33, 33' - as measured along the length axis L - equals a distance from the joint 11 to the distal end 21 of the gripper fingers 9, 9' - as also measured along the length axis L. Thus, a comparatively high torque can be introduced into the gripper fingers 9, 9' by the actuator mechanism 41 by applying a relatively low force to the arms 33, 33'.

In particular, the joint 11 is arranged in a distance from a rigid main body 43 of the gripping device 1, the main body 43 preferably comprising the actuator mechanism 41. In particular, the main body 43 may comprise a housing for accommodating the actuator mechanism 41.

The joint 11 is mounted to a joint support 45 attached to and extending from the main body 43, as shown in figure 1.

The main body 43 preferably is fixed or attached to the interface 7 - in the embodiment shown in figure 1 preferably via an intermediate part 47.

The joint support 45 preferably has thread and a bearing tube guidance for locking a screw 49 with a bearing tube, thus forming the rotational joint 11.

With respect in particular to figure 2, each arm 33, 33' corresponding to a certain gripper finger 9, 9' is located at the same side of a virtual plane as the certain gripper finger 9, 9' corresponding to the arm 33, 33', the virtual plane comprising both the rotational axis A and the length axis L and thus dividing the gripper fingers 9, 9' from each other, and at the same time dividing the space into two half-spaces, each half-space accommodating one of the gripper fingers 9,9'. Thus, a first gripper finger 9, 9' of the gripper fingers 9, 9' is arranged at another side of the plane than a second gripper finger 9, 9' of the gripper fingers 9, 9'. In particular, the first arm 33 is located in the same half-space at its corresponding first gripper finger 9, and in another half-space than the second arm 33' which, in turn, is located in the same half-space with its corresponding second gripper finger 9'. Thus, the different gripper elements 37 as a whole are located in different half-spaces. This is unlike the configuration of known scissors, wherein scissor elements cross each other at a joint. Thus, when the actuator mechanism 41 urges the arms 33, 33' towards each other, the gripper fingers 9, 9' are spread apart from each other. When the actuator mechanism 41 moves the arms 33, 33' away from each other, the gripper fingers 9, 9' are urged towards each other.

Preferably, the actuator mechanism 41 comprises at least one pneumatic actuator 51, 51', and further, the gripper fingers 9, 9' are preferably pre-tensioned into their gripping position by at least one pre-load element 53, 53', the pre-load element 53, 53' preferably being comprised by the actuator mechanism 41. Most preferably, the gripper fingers 9, 9' are urged into the gripping position by both the pre-load element 53, 53' and the pneumatic actuator 51, 51'. The gripper fingers 9, 9' are urged into their release position by the at least one pneumatic actuator 51, 51', in particular against the pre-tension force of the pre-load element 53, 53'.

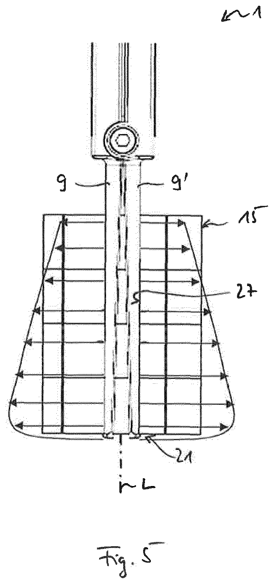

**FIG. 5** schematically shows the distribution of the total gripping force along the length axis L, wherein the length of the arrows denotes the local amount of the gripping force or gripping pressure, respectively acted upon the inner circumferential surface 27 of the object 15 by the gripper fingers 9, 9'. By combining the force applied by the actuator mechanism 41 and further the elastic force due to the elastic deformation of the gripper fingers 9, 9' in the region of the distal end 21, the total gripping force or gripping pressure, respectively, is higher for the lower part of the object 15 than for its higher part.

The robot 3 in particular is configured to remove an inner cut-out stack of plates from a wire electric discharge machining machine.

## Claims

1. Gripping device (1) configured as a robot tool or a robot hand, having
- at least two gripper fingers (9, 9') rotationally coupled to each other by a joint (11),
- the gripper fingers (9, 9') being pivotable about a rotational axis (A) defined by the joint (11) between at least a gripping position and a release position, wherein
- an angle between the gripper fingers (9, 9') about the rotational axis (A) is larger in the gripping position than in the release position, wherein,
- the gripper fingers (9, 9') are configured to reach through a through-hole (13) in an object (15) to be gripped by the gripping device (1) from a first side (17) of the object (15), wherein
- the gripper fingers (9, 9') have an end piece (19) at a distal end (21) thereof, the end piece (19) being configured to engage behind the object (15) at a second side (23) opposite the first side (17) along a length axis (L) of the gripper fingers (9, 9'), and wherein
- the joint (11) is fixed to a joint support (45), the joint support (45) extending from a main body (43) which comprises an actuator mechanism (41) for actuating the gripper fingers (9, 9') between at least the gripping position and the release position, such that the joint (11) is arranged in a distance from the main body (43); and wherein the gripper fingers (9, 9') are elastically deformable in a region of the distal end (21) thereof.

2. Gripping device (1) according to claim 1, wherein the gripper fingers (9, 9') have an outer surface (25), wherein the gripper fingers (9, 9') are configured to engage an inner circumferential surface (27) of the through-hole (13) of the object (15) with the outer surface (25) in the gripping position.

3. Gripping device (1) according to any of the preceding claims, wherein the outer surface (25) of the gripper fingers (9, 9') is conical in the release position, wherein a cone angle of the outer surface (25) is selected such that the outer surface (25) makes full surface contact with the inner circumferential surface (27) of the object (15) in the gripping position.

4. Gripping device (1) according to any of the preceding claims, wherein the end piece (19) has a proximal surface (29) which is conical with a cone angle of from at least 50° to at most 56°, preferably from at least 51° to at most 55°, preferably from at least 52° to at most 54°, preferably of 53°.

5. Gripping device (1) according to any of the preceding claims, wherein an arm (33, 33') is coupled to each gripper finger (9, 9') of the at least two gripper fingers (9, 9'), each of the arms (33, 33') extending from the joint (11) towards a proximal end (35) of the arms (33, 33'), the arms (33, 33') being coupled at a coupling area (39) to the actuator mechanism (41) configured to pivot the gripper fingers (9, 9') from the release position into the gripping position.

6. Gripping device (1) according to any of the preceding claims, wherein a distance from the joint (11) to the coupling area (39) of the arms (33, 33') equals a distance from the joint (11) to the distal end (21) of the gripper fingers (9, 9').

7. Gripping device (1) according to any of the preceding claims, wherein each arm (33, 33') of the arms (33, 33') corresponding to a certain gripper finger (9, 9') is located at the same side of a virtual plane as the certain gripper finger (9, 9') corresponding to the arm (33, 33'), the virtual plane comprising the rotational axis (A), and dividing the at least two gripper fingers (9, 9') from each other, such that a first gripper finger (9, 9') of the at least two gripper fingers (9, 9') is arranged at another side of the virtual plane than a second gripper finger (9, 9') of the at least two gripper fingers (9, 9').

8. Robot (3) having a gripping device (1) according to any of claims 1 to 7, in particular as a robot tool or a robot hand.

9. Robot (3) according to claim 8, wherein the robot (3) is configured to remove an inner cut out stack of plates from a wire electric discharge machining machine.

10. Wire electric discharge machining machine cell (5), having a robot (3) according to any of claims 8 and 9.

## Patentansprüche

1. Greifvorrichtung (1), die als ein Roboterwerkzeug oder eine Roboterhand ausgestaltet ist, aufweisend:
- mindestens zwei Greiferfinger (9, 9'), die über ein Gelenk (11) aneinander drehgekoppelt sind,
- wobei die Greiferfinger (9, 9') um eine durch das Gelenk (11) definierte Rotationsachse (A) zwischen mindestens einer Greifposition und einer Freigabeposition schwenkbar sind, wobei
- ein Winkel zwischen den Greiferfingern (9, 9') um die Rotationsachse (A) in der Greifposition größer als in der Freigabeposition ist, wobei
- die Greiferfinger (9, 9') dazu ausgestaltet sind, durch ein Durchgangsloch (13) in einem von der Greifvorrichtung (1) zu ergreifenden Gegenstand (15) von einer ersten Seite (17) des Gegenstands (15) hindurchzugreifen, wobei
- die Greiferfinger (9, 9') ein Endteil (19) an einem distalen Ende (21) davon haben, wobei das Endteil (19) dazu ausgestaltet ist, hinter dem Gegenstand (15) an einer der ersten Seiten (17) gegenüberliegenden zweiten Seite (23) entlang einer Längsachse (L) der Greiferfinger (9, 9') in Eingriff zu kommen, und wobei
- das Gelenk (11) an einer Gelenkstütze (45) befestigt ist, wobei sich die Gelenkstütze (45) von einem Hauptkörper (43) erstreckt, der einen Aktuatormechanismus (41) zur Betätigung der Greiferfinger (9, 9') zwischen mindestens der Greifposition und der Freigabeposition umfasst, so dass das Gelenk (11) mit einem Abstand von dem Hauptkörper (43) angeordnet ist, und wobei die Greiferfinger (9, 9') in einem Bereich des distalen Endes (21) davon elastisch deformierbar sind.

2. Greifvorrichtung (1) nach Anspruch 1, wobei die Greiferfinger (9, 9') eine Außenfläche (25) haben, wobei die Greiferfinger (9, 9') dazu ausgestaltet sind, eine innere Umfangsfläche (27) des Durchgangslochs (13) des Gegenstands (15) mit der Außenfläche (25) in der Greifposition in Eingriff zu nehmen.

3. Greifvorrichtung (1) nach einem der vorhergehenden Ansprüche, wobei die Außenfläche (25) der Greiferfinger (9, 9') in der Freigabeposition konisch ist, wobei ein Konuswinkel der Außenfläche (25) so gewählt ist, dass die Außenfläche (25) in der Greifposition in vollen Oberflächenkontakt mit der inneren Umfangsfläche (27) des Gegenstands (15) kommt.

4. Greifvorrichtung (1) nach einem der vorhergehenden Ansprüche, wobei das Endteil (19) eine proximale Fläche (29) hat, die konisch ist mit einem Konuswinkel von mindestens 50° bis höchstens 56°, vorzugsweise von mindestens 51° bis höchstens 55°, vorzugsweise von mindestens 52° bis höchstens 54°, vorzugsweise 53°.

5. Greifvorrichtung (1) nach einem der vorhergehenden Ansprüche, wobei ein Arm (33, 33') an jeden Greiferfinger (9, 9') der mindestens zwei Greiferfinger (9, 9') gekoppelt ist, wobei sich jeder der Arme (33, 33') von dem Gelenk (11) zu einem proximalen Ende (35) der Arme (33, 33') erstreckt, wobei die Arme (33, 33') an einem Koppelbereich (39) an den Aktuatormechanismus (41) gekoppelt sind, der dazu ausgestaltet ist, die Greiferfinger (9, 9') aus der Freigabeposition in die Greifposition zu schwenken.

6. Greifvorrichtung (1) nach einem der vorhergehenden Ansprüche, wobei ein Abstand von dem Gelenk (11) zu dem Koppelbereich (39) der Arme (33, 33') gleich einem Abstand von dem Gelenk (11) zu dem distalen Ende (21) der Greiferfinger (9, 9') ist.

7. Greifvorrichtung (1) nach einem der vorhergehenden Ansprüche, wobei jeder Arm (33, 33') der Arme (33, 33'), der einem bestimmten Greiferfinger (9, 9') entspricht, auf derselben Seite einer virtuellen Ebene wie der gewisse Greiferfinger (9, 9'), der dem Arm (33, 33') entspricht, angeordnet ist, wobei die virtuelle Ebene die Rotationsachse (A) umfasst und die mindestens zwei Greiferfinger (9, 9') voneinander trennt, so dass ein erster Greiferfinger (9, 9') der mindestens zwei Greiferfinger (9, 9') an einer anderen Seite der virtuellen Ebene als ein zweiter Greiferfinger (9, 9') der mindestens zwei Greiferfinger (9, 9') angeordnet ist.

8. Roboter (3) mit einer Greifvorrichtung (1) nach einem der Ansprüche 1 bis 7, insbesondere als ein Roboterwerkzeug oder eine Roboterhand.

9. Roboter (3) nach Anspruch 8, wobei der Roboter (3) dazu ausgestaltet ist, einen inneren plattenstapelförmigen Abfallbutzen von einer Drahterodiermaschine zu entfernen.

10. Drahterodierzelle (5) mit einem Roboter (3) nach einem der Ansprüche 8 und 9.

## Revendications

1. Dispositif de préhension (1) conçu comme un outil de robot ou une main de robot, comportant
- au moins deux doigts de préhension (9, 9') accouplés de manière rotative l'un à l'autre par une articulation (11),
- les doigts de préhension (9, 9') étant aptes à pivoter autour d'un axe de rotation (A) défini par l'articulation (11) entre au moins une position de préhension et une position de libération, dans lequel
- un angle entre les doigts de préhension (9, 9') autour de l'axe de rotation (A) est plus grand dans la position de préhension que dans la position de libération, dans lequel
- les doigts de préhension (9, 9') sont conçus pour pénétrer dans un trou débouchant (13) dans un objet (15) à saisir par le dispositif de préhension (1) depuis un premier côté (17) de l'objet (15), dans lequel
- les doigts de préhension (9, 9') comportent une pièce d'extrémité (19) à une extrémité distale (21) de ceux-ci, la pièce d'extrémité (19) étant conçue pour entrer en prise derrière l'objet (15), au niveau d'un second côté (23) à l'opposé du premier côté (17) le long d'un axe longitudinal (L) des doigts de préhension (9, 9'), et dans lequel
- l'articulation (11) est fixée à un support d'articulation (45), le support d'articulation (45) s'étendant à partir d'un corps principal (43) qui comprend un mécanisme d'actionnement (41) destiné à actionner les doigts de préhension (9, 9') entre au moins la position de préhension et la position de libération, de telle sorte que l'articulation (11) est située à une certaine distance du corps principal (43) ; et dans lequel les doigts de préhension (9, 9') sont déformables élastiquement dans une région de l'extrémité distale (21) de ceux-ci.

2. Dispositif de préhension (1) selon la revendication 1, dans lequel les doigts de préhension (9, 9') comportent une surface extérieure (25), dans lequel les doigts de préhension (9, 9') sont conçus pour entrer en prise avec une surface circonférentielle intérieure (27) du trou débouchant (13) de l'objet (15) par le biais de la surface extérieure (25) dans la position de préhension.

3. Dispositif de préhension (1) selon l'une quelconque des revendications précédentes, dans lequel la surface extérieure (25) des doigts de préhension (9, 9') est conique dans la position de libération, dans lequel un angle de conicité de la surface extérieure (25) est choisi de telle sorte que la surface extérieure (25) entre en contact sur sa surface entière avec la surface circonférentielle intérieure (27) de l'objet (15) dans la position de préhension.

4. Dispositif de préhension (1) selon l'une quelconque des revendications précédentes, dans lequel la pièce d'extrémité (19) comporte une surface proximale (29) qui est conique avec un angle de conicité compris entre au moins 50° et au plus 56°, de préférence entre au moins 51° et au plus 55°, de préférence entre au moins 52° et au plus 54°, de préférence de 53°.

5. Dispositif de préhension (1) selon l'une quelconque des revendications précédentes, dans lequel un bras (33, 33') est accouplé à chaque doigt de préhension (9, 9') parmi les au moins deux doigts de préhension (9, 9'), chacun des bras (33, 33') s'étendant à partir de l'articulation (11) en direction d'une extrémité proximale (35) des bras (33, 33'), les bras (33, 33') étant accouplés au niveau d'une région d'accouplement (39) au mécanisme d'actionnement (41) conçu pour faire pivoter les doigts de préhension (9, 9') de la position de libération à la position de préhension.

6. Dispositif de préhension (1) selon l'une quelconque des revendications précédentes, dans lequel une distance de l'articulation (11) à la région d'accouplement (39) des bras (33, 33') est égale à une distance de l'articulation (11) à l'extrémité distale (21) des doigts de préhension (9, 9').

7. Dispositif de préhension (1) selon l'une quelconque des revendications précédentes, dans lequel chaque bras (33, 33') parmi les bras (33, 33') correspondant à un certain doigt de préhension (9, 9') est situé du même côté d'un plan virtuel que le doigt de préhension (9, 9') en question correspondant au bras (33, 33'), le plan virtuel comprenant l'axe de rotation (A), et séparant les au moins deux doigts de préhension (9, 9') l'un de l'autre, de telle sorte qu'un premier doigt de préhension (9, 9') parmi les au moins deux doigts de préhension (9, 9') est situé d'un autre côté du plan virtuel par rapport à un second doigt de préhension (9, 9') parmi les au moins deux doigts de préhension (9, 9').

8. Robot (3) comportant un dispositif de préhension (1) selon l'une quelconque des revendications 1 à 7, en particulier comme outil de robot ou main de robot.

9. Robot (3) selon la revendication 8, le robot (3) étant conçu pour enlever un empilement intérieur de plaques découpées d'une machine d'usinage par électroérosion par fil.

10. Cellule (5) de machine d'usinage par électroérosion par fil comportant un robot (3) selon l'une quelconque des revendications 8 et 9.
